# EUROPÄISCHE PATENTANMELDUNG

(11) **EP 3 246 193 A1**
(43) Veröffentlichungstag der Anmeldung: **22.11.2017**
(21) Anmeldenummer: 16170655.1
(22) Anmeldetag: 20.05.2016
(51) Int. Cl.: B60L 1/00, B60P 3/20, B61D 3/20, B61D 27/00, B60L 11/18

(54) **ENERGIEVERSORGUNGSANORDNUNG**

(71) Anmelder: railCare AG, 4624 Härkingen (CH)
(72) Erfinder: Zettel, Josef, 6276 Hohenrain (CH); Wegmüller, Philipp, 8956 Killwangen (CH); Wegmüller, Beat, 4950 Huttwil (CH)
(74) Vertreter: Stäbler, Roman

(57) **Zusammenfassung**

Die Erfindung betrifft eine Energieversorgung (11) zur Versorgung eines Energieverbrauchers mit elektrischer Energie. Die Energieversorgung (11) umfasst eine Montagevorrichtung (20) sowie eine Batterie (29), eine Ladevorrichtung (30) und einen Lastanschluss (33). Die Energieversorgung (11) umfasst weiter einen Energieanschluss zum Anschliessen einer Energiequelle, sowie einen Energiewandler (31) um die am Energieanschluss empfangene Energie in eine zum Laden der Batterie (29) geeignete Form elektrischer Energie umzuwandeln. Die in der Batterie (29) gespeicherte Energie kann dann am Lastanschluss (33) zur Speisung eines oder mehrerer daran angeschlossener Energieverbraucher zur Verfügung gestellt werden. Die Montagevorrichtung (20) ist dabei mit Verbindungsvorrichtungen (23, 24) versehen, welche kompatibel sind zu jenen Befestigungsvorrichtungen, mit welchen entsprechende Transportbehälter üblicherweise mit einem Transportfahrzeug verbunden werden können. So ist es möglich, eine solche Energieversorgung (11) für den Transport eines Transportbehälters zwischen diesem und dem passende Transportfahrzeug anzuordnen, wobei für das Laden der Batterie (29) beispielsweise die kinetische Energie des bewegten Transportfahrzeugs genutzt werden kann, indem z. B. mit einem Hydraulik-Generator die Rotation der Radachse des Fahrzeugs in elektrische Energie umgewandelt wird.

## Beschreibung

### Technisches Gebiet

Die Erfindung betrifft eine Energieversorgungsanordnung zur Versorgung eines Energieverbrauchers mit elektrischer Energie, mit einer Montagevorrichtung, an welcher ein Energieanschluss zum Empfangen von Energie, ein Energiespeicher zum Speichern von elektrischer Energie, eine Ladevorrichtung zum Speichern von an dem Energieanschluss empfangener Energie im Energiespeicher, sowie ein Lastanschluss zum Anschliessen des Energieverbrauchers zur Versorgung des Energieverbrauchers mit der im Energiespeicher gespeicherten elektrischen Energie angeordnet sind. Weiter betrifft die Erfindung einen mit einer solchen Energieversorgungsanordnung verbundenen Transportbehälter sowie ein mit einer solchen Energieversorgungsanordnung verbundenes Fahrzeug sowie ein Verfahren zur Energieversorgung eines Energieverbrauchers mit elektrischer Energie mit einer solchen Energieversorgungsanordnung.

### Stand der Technik

Nicht nur die Mobilität von Personen, auch der Transport von Waren nimmt weltweit immer mehr zu. Solche Waren können dabei sämtliche Waren umfassen, bei welchen Produktions- oder Herstellungsort nicht dem Ort der Verwendung bzw. Konsumation entspricht. Die Spannweite solcher Waren oder Güter, nachfolgend allgemein auch als Fracht bezeichnet, reicht von beispielsweise einfachen Kugelschreibern über elektronische Geräte bis zu Anlagen oder Bauteilen für Kraftwerke. Und sie reicht beispielsweise von Rohstoffen - etwa für die chemische, die pharmazeutische oder die Lebensmitteltechnologie - über entsprechende Zwischenprodukte bis hin zu lange lagerbaren oder schnell verderblichen Lebensmitteln.

Viele dieser Waren werden für den Transport über mehr oder weniger weite Strecken - je nach Anwendung können dies einige Kilometer bis einige zigtausend Kilometer sein - in Transportbehältern verstaut, welche sich typischerweise einfacher transportieren lassen als die Waren in ihrer Originalverpackung oder allfälligen anderen Behältern, in welchen solche Waren üblicherweise gelagert werden. Für den Massentransport von Fracht werden üblicherweise genormte Behälter verwendet wie etwa Container gemäss der ISO-Norm 668. Solche genormten oder anderweitig einheitlichen Container haben den Vorteil, dass sie einerseits leicht stapelbar sind und dass sie andererseits mit jedem Fahrzeug, das für den Transport solcher genormter Container ausgelegt ist, transportierbar sind.

Der Transport solcher Transportbehälter vom Start- zum Zielort erfolgt häufig mit unterschiedlichen Fahrzeugen wie etwa Schiffen, Zügen oder LKWs.

Beim Transport von Waren sind häufig auch gewisse Bedingungen einzuhalten, damit die Waren selber nicht zerstört oder deren Qualität durch den Transport nicht negativ beeinflusst wird. Bestimmte Lebensmittel müssen für einen längeren Transport unter teilweise sogar wechselnden Umweltbedingungen gehalten werden. Bananen beispielsweise werden über weite Strecken unter einer Schlafatmosphäre transportiert, um ein vorzeitiges Reifen zu verhindern. Bei anderen Waren wiederum spielt deren Temperatur eine grosse Rolle. Viele Lebensmittel wie etwa Milchprodukte oder Tiefkühlprodukte müssen beispielsweise gekühlt oder sogar tiefgefroren transportiert werden, damit sie während des Transports nicht verderben. Andere Produkte wie etwa Gase oder Flüssigkeiten müssen ebenfalls häufig temperiert werden, wobei der Transport teilweise auch unter vorgegebenen Druckbedingungen zu erfolgen hat. Bitumen muss für den Transport beispielsweise beheizt werden, damit es nicht aushärtet.

Heizungen, Kühlungen oder andere Vorrichtungen zur Einstellung und Regulierung bestimmter Transportbedingungen benötigen für deren Betrieb in der Regel Energie oder andere Betriebsstoffe wie beispielsweise Brenn- oder Kühlstoffe oder auch elektrische Energie.

Aus der DE 1 940 999 ist beispielsweise ein Kühlwagen bekannt, der über zwei an der Aussenseite des Wagenkastens angebrachte Klimaanlagegruppen verfügt, die entweder mit elektrischer Energie oder mit flüssigem Stickstoff betrieben werden, wobei der Stickstoff mitgeführt wird und die elektrische Energie von Generatoren erzeugt wird, die durch die Räder des Fahrzeugs angetrieben werden. Zudem sind Stecker vorgesehen, über welche die Klimaanlagen von aussen mit Energie versorgt werden können. Einerseits ergibt sich hier das Problem, dass bei Stillstand des Kühlwagens und wenn keine externe Stromquelle zur Verfügung steht, keine Kühlung des Kühlwagens sichergestellt werden kann. Auch die mitgeführte Menge an Stickstoff wird irgendwann aufgebraucht sein. D.h. entweder muss der Kühlwagen regelmässig bewegt werden, oder es muss Stickstoff nachgefüllt werden oder der Kühlwagen muss anderweitig mit Strom versorgt werden. All dies bedeutet einen grossen logistischen Aufwand.

Aus dem deutschen Gebrauchsmuster G 93 03 046 U1 ist beispielsweise ein Gelenktragwagen für den Transport von Kühlcontainern und/oder Kühlwechselbehältern bekannt, der über ein Diesel-Generator-Aggregat verfügt, das zur Versorgung von Kühlcontainern oder Kühlwechselbehältern mit elektrischer Energie dient, welche keine eigene Energieversorgung für deren Kühl- und/oder Heizanlagen haben. Der notwendige Brennstoff für den Diesel-Generator muss beim Transport ebenfalls mitgeführt werden, wobei auch hier die Menge an Brennstoff beschränkt ist und damit nur für eine begrenzte Zeit ausreicht. Bei längeren Transporten ergibt sich auch hier ein erhöhter logistischer Aufwand.

Aus der EP 2 647 540 A1 ist eine andere Energieversorgung für im Schienenverkehr transportierte Kühlcontainer bekannt, bei welcher der den Kühlcontainer tragende Containertragwagen einen Transformator umfasst, um die von der elektrischen Lokomotive via Heizkabel gelieferte elektrische Energie in eine für den Betrieb des Kühlcontainers geeignete Form elektrischer Energie umzuwandeln. Das grösste Problem bei dieser Lösung stellt sich im internationalen Transportverkehr, weil die Eisenbahn-Infrastrukturen teilweise auf unterschiedlich ausgebildeten Energieversorgungs-Netzen aufbauen, welche nicht miteinander kompatibel sind. D.h. der Transformator müsste entweder für unterschiedliche Eingangsspannungen ausgelegt sein oder es müssten mehrere Transformatoren vorgesehen sein - einer für jedes mögliche Energieversorgungs-Netz. Beides ist aufwändig und teuer.

Aus der DE 41 15 964 wiederum ist bekannt, Sonnenergie zum Betrieb von mobilen Kälteanlagen mit einer Kaltdampf-Kältemaschine zu nutzen. Hierbei wird das Kühlfahrzeug mit Solarzellen ausgerüstet, wobei ein Solargenerator einen Energiespeicher lädt, mit deren Ladung schliesslich die Kältemaschine betrieben wird. Solaranlagen liefern bekanntermassen nur dann ausreichend Strom, wenn die Sonneneinstrahlung genügend hoch ist. In Ländern mit einer geringen Sonneneinstrahlung oder wenn die Sonneneinstrahlung aus anderen Gründen reduziert ist, beispielsweise wegen tagelangen Schlechtwetters, liefert dieses System nicht genügend Energie, um die geforderten Transportbedingungen genügend lange aufrecht zu erhalten.

Zudem haben alle oben erwähnten, bekannten Lösungen das Problem, dass zu deren Nutzung die betreffenden Transportbehälter und/oder die entsprechenden Transportfahrzeuge spezifisch ausgerüstet werden müssen. Diese Lösungen sind damit teuer und können darüber hinaus nicht flexibel, d.h. mit unterschiedlichen Transportbehältern und/oder unterschiedlichen Transportfahrzeugen eingesetzt werden.

### Darstellung der Erfindung

Aufgabe der Erfindung ist es, eine dem eingangs genannten technischen Gebiet zugehörende Energieversorgungsanordnung zu schaffen, welche die Nachteile des oben genannten Stands der Technik vermeidet und es insbesondere erlaubt, eine günstige und flexible Lösung zur Energieversorgung von Energieverbrauchern im Zusammenhang mit dem Transport von Waren bereit zu stellen. Weitere Aufgaben der Erfindung sind es, einen entsprechenden Transportbehälter, ein entsprechendes Fahrzeug sowie ein entsprechendes Verfahren zur Energieversorgung eines Energieverbrauchers mit elektrischer Energie zu schaffen.

Die Lösung der Aufgabe ist durch die Merkmale des Anspruchs 1 definiert. Gemäss der Erfindung umfasst die Montagevorrichtung eine erste Verbindungsvorrichtung zur lösbaren Verbindung mit einer Befestigungsvorrichtung eines Transportbehälters zur Verbindung des Transportbehälters mit einem gleichartigen Transportbehälter bzw. mit einem Fahrzeug. Das Fahrzeug ist hierbei entweder ein Schienenfahrzeug, ein Kraftfahrzeug wie etwa ein LKW oder ein Wasserfahrzeug wie beispielsweise ein Schiff.

Ein solcher Transportbehälter kann dabei ein geschlossener Behälter wie auch ein zumindest teilweise offener Behälter, beispielsweise ein Behälter mit Boden und Stirnseiten, aber ohne Deckel und Seitenwänden sein. Bei dem Transportbehälter handelt es sich allerdings vorzugsweise um einen genormten Container für den Warentransport, wie er weiter oben erwähnt ist. Unter dem Begriff Container sind auch andere Behälter wie z. B. Wechselbehälter bzw. Wechselbrücken zu verstehen. Dies ermöglicht die Nutzung der Erfindung mit einer Vielzahl von im Warenverkehr eingesetzten Transportbehältern.

Auf diese Weise ist die Montagevorrichtung und damit natürlich auch die Energieversorgungsanordnung, welche eine solche Montagevorrichtung umfasst, auf einfache Art und Weise an einem solchen Transportbehälter befestigbar bzw. mit einem solchen Transportbehälter verbindbar. Zur Energieversorgung des Energieverbrauchers muss dieser lediglich an dem Lastanschluss angeschlossen werden und der Energieverbraucher kann mit der im Energiespeicher gespeicherten Energie betrieben werden - unabhängig von Energiequellen, die am oder im Transportbehälter mitgeführt werden müssten. Da zur Verbindung der Energieversorgungsanordnung mit dem Transportbehälter diejenige Befestigungsvorrichtung des Transportbehälters genutzt wird, mit welcher der Transportbehälter ansonsten mit einem Fahrzeug oder mit einem gleichartigen Transportbehälter verbunden wird, muss der Transportbehälter zur Nutzung der Erfindung in keiner Art und Weise bearbeitet, ergänzt oder abgeändert werden.

Entsprechend kann die Erfindung mit jedem beliebigen Transportbehälter genutzt werden, der über die entsprechende Befestigungsvorrichtung verfügt. Wie diese konkret beschaffen ist, hängt wiederum davon ab, mit welcher Art von Transportbehältern die Erfindung genutzt werden soll.

Ein weiterer Vorteil der Erfindung ist, dass durch diese Ausgestaltung der Energieversorgungsanordnung mit einer Montagevorrichtung und daran befestigten Komponenten, die Energieversorgungsanordnung nach der Verbindung mit einem entsprechenden Fahrzeug, beispielsweise einem Containertragwagen, zumindest in gewissen Ländern als Ladung und nicht als Teil des Tragwagens gilt. Dadurch gelten weniger strenge Vorschriften für die konkrete Ausgestaltung der Energieversorgungsanordnung. Zudem lässt sich die Energieversorgungsanordnung jederzeit und ohne bleibende Änderungen an einem Fahrzeug wieder von diesem entfernen.

Der Energiespeicher umfasst vorzugsweise eine Batterie, in welcher die zugeführte elektrische Energie in Form von chemischer Energie gespeichert wird. Im Prinzip kann der Energiespeicher aber auch andere Speichervarianten zum Speichern von elektrischer Energie umfassen wie etwa Kondensatoren oder Schwungräder, aber die Kapazität dieser Speicher ist noch zu gering, als dass sie sich wirtschaftlich betreiben liessen.

Der Energieverbraucher ist beispielsweise ein Kühlaggregat zur Kühlung der in einem Transportbehälter zu transportierenden Fracht. Er kann auch eine Heizvorrichtung sein, mit welcher sich die Fracht beheizen lässt. Auch eine Anlage zur Begasung der Fracht kann ein solcher Energieverbraucher sein. Es ist natürlich aber auch möglich, einen beliebigen, nicht unbedingt in direktem Zusammenhang mit der Fracht stehenden Energieverbraucher mit der Energie aus dem Energiespeicher zu betreiben. So könnte es sich bei dem Energieverbraucher auch um eine Beleuchtung für den Transportbehälter, um eine automatische Fütterungsanlage zur Fütterung von im Transportbehälter beförderten Tieren oder auch um elektronische Geräte wie beispielsweise eine Musik- oder gar Multimediaanlage handeln.

Damit die Energieversorgungsanordnung nicht nur mit einem passenden Transportbehälter sondern auch an, im oder auf einem Fahrzeug zum Transport eines derartigen Transportbehälters befestigt, d.h. mit einem solchen Fahrzeug verbunden werden kann, umfasst die Montagevorrichtung in einer bevorzugten Ausführungsform der Erfindung eine zweite Verbindungsvorrichtung zur lösbaren Verbindung der Montagevorrichtung mit einer Befestigungsvorrichtung des Fahrzeugs zur Verbindung des Fahrzeugs mit dem Transportbehälter.

Auf diese Weise kann die Montagevorrichtung und damit natürlich auch die Energieversorgungsanordnung auf einfache Art und Weise mit einem derartigen Fahrzeug verbunden, beispielsweise auf dem Fahrzeug befestigt werden. Da zur Verbindung der Energieversorgungsanordnung mit dem Fahrzeug diejenige Befestigungsvorrichtung des Fahrzeugs genutzt wird, mit welcher ansonsten ein Transportbehälter mit dem Fahrzeug verbunden wird, muss auch das Fahrzeug selber zur Nutzung der Erfindung in keiner Art und Weise bearbeitet, ergänzt oder abgeändert werden. Entsprechend kann die Erfindung mit jedem beliebigen Transportbehälter genutzt werden, der über die entsprechende Befestigungsvorrichtung verfügt. Wie diese konkret beschaffen ist, hängt wiederum davon ab, mit welcher Art von Transportbehältern die Erfindung genutzt werden soll.

Wie bereits erwähnt, werden solche Transportbehälter, beispielsweise Container entsprechend der oben genannten ISO-Norm, für den Warentransport üblicherweise mit einem oder mehreren Fahrzeugen transportiert. Ein Container mit den zu transportierenden Waren wird beispielsweise am Startort mit einem LKW (Lastkraftwagen) abgeholt, mit dem LKW zur nächsten Verladestation für den Verlad von solchen Containern auf die Schiene gebracht, dort auf ein Schienenfahrzeug, beispielsweise einen Containertragwagen verschoben, auf der Schiene zu einer Verladestation in der Nähe des Zielortes transportiert, wo der Container wiederum auf einen LKW umgeladen und mit diesem schliesslich an den Zielort gebracht wird (kombinierter Verkehr).

Solche ISO-Container werden insbesondere deshalb verwendet, weil sie typischerweise derart ausgelegt sind, dass ihr Ladevolumen mit kleineren Transportbehältern wie etwa Europaletten möglichst gut ausgenutzt werden kann.

Als Schienenfahrzeug für den Transport solcher Container können sämtliche Bahnwagen verwendet werden, die über die entsprechenden Befestigungsvorrichtungen verfügen bzw. an denen solche Befestigungsvorrichtungen angebracht werden können und bei denen in der Höhe genügend Platz für einen derartigen Container bleibt. Typischerweise werden verschiedene Arten von Flachwagen für den Containertransport eingesetzt.

Die Befestigungsvorrichtung des Fahrzeugs zur Verbindung des Fahrzeugs mit einem Transportbehälter umfasst typischerweise eine Mehrzahl von Zapfen, die bestimmte Masse wie Höhe und Durchmesser bzw. Höhe, Länge und Breite aufweisen und in einem Rechteck angeordnet sind, welches eine definierte Breite sowie eine definierte Länge aufweist. Die Zapfen sind beispielsweise in einem seitlichen Abstand von 2260 Millimeter und in einem Längsabstand von 5853 Millimeter angeordnet, wobei je nach Länge des Fahrzeugs auch mehrere solcher Vierer-Sets von Zapfen hintereinander auf dem Fahrzeug angeordnet sein können. Die eingangs genannten ISO-Container gibt es beispielsweise mit einer Breite von 8 Fuss und in verschiedenen, definierten Längen von beispielsweise 20 oder 40 Fuss. Der Begriff Fuss bezieht sich dabei auf das englische Längenmass ft, bei welchem ein Fuss 30.48 cm misst. Ein 20 Fuss Container wird dann beispielsweise ein solches Vierer-Set von Zapfen belegen, ein 40 Fuss Container belegt entsprechend zwei hintereinander liegende Vierer-Sets von Zapfen, etc. Es ist anzumerken, dass nicht jede Container-Position eines Fahrzeugs zwingend mit entsprechenden Zapfen ausgerüstet sein muss, da die Zapfen auch so ausgebildet sein können, dass sie leicht entfernbar und wieder anbringbar sind.

Die Befestigungsvorrichtung des Transportbehälters zur Verbindung des Transportbehälters mit einem gleichartigen Transportbehälter bzw. mit einem Fahrzeug umfasst in einem solchen Fall dann eine Mehrzahl von Öffnungen, welche entsprechend in einem Rechteck angeordnet sind und zur Aufnahme der Zapfen dienen. Die Zapfen sind hierfür aussen in der Regel konisch ausgebildet und die Öffnungen haben einen passenden Innenkonus. Hierbei gibt es Systeme, bei welchen ein solcher Transportbehälter mit seinen Öffnungen lediglich auf die Zapfen aufgelegt wird. Weiter gibt es Systeme, bei welchen ein mit seinen Öffnungen auf die Zapfen eines Fahrzeugs aufgelegter Transportbehälter zusätzlich gesichert werden kann, damit er sich beim Transport nicht löst. Eine solche Verbindungsvorrichtung kann auch genutzt werden, um einen Transportbehälter mit einem anderen, baugleichen Transportbehälter zu verbinden, beispielsweise um sie zu stapeln. Baugleich ist hierbei in Bezug auf die Verbindungsvorrichtung zu verstehen, da die Transportbehälter in ihrer konkreten Ausgestaltung durchaus unterschiedlich sein können.

Selbstverständlich können die Zapfen und Öffnungen auch vertauscht sein, d.h. die Zapfen können auch am Transportbehälter und die Öffnungen am Fahrzeug vorgesehen sein. Es ist natürlich auch möglich, dass Transportbehälter und Fahrzeug mit einer anderen Art von Verbindungs- oder Befestigungsvorrichtung, beispielsweise anderen kraft- und oder formschlüssigen Verbindungen für den Transport des Behälters mit dem Fahrzeug lösbar miteinander verbunden werden können, wobei die Verbindungen sowohl gesichert als auch ungesichert sein können. Das gilt auch für Verbindungsvorrichtungen zum Verbinden von zwei Transportbehältern.

Die am Energieanschluss empfangene Energie kann grundsätzlich verschiedene Formen aufweisen. Es kann sich beispielsweise um thermische, chemische, potentielle, kinetische oder irgendeine andere denkbaren Form von Energie handeln. Es kann sich auch um elektrische Energie handeln, die beispielsweise mittels Photovoltaik oder Windkraft vom oder auf dem Fahrzeug selber produziert wird. In den meisten Fällen ist die empfangene Energieform daher nicht direkt zur Speicherung im Energiespeicher geeignet. In einem vorteilshaften Ausführungsbeispiel der Erfindung umfasst die Energieversorgungsanordnung daher einen Energiewandler zur Umwandlung der am Energieanschluss empfangenen Energie in elektrische Energie, welche von der Ladevorrichtung im Energiespeicher speicherbar ist. Je nach Art der Energiequelle muss der Energiewandler entsprechend anders ausgebildet sein. Wird am Energieanschluss etwa Energie in chemischer Form geliefert, beispielsweise in Form von Brennstoff wie Erdgas, Diesel oder Benzin, etc., kann der Energiewandler beispielsweise einen Elektro-Generator umfassen, der mit dem Brennstoff betreibbar ist und die im Brennstoff gespeicherte chemische Energie in elektrische Energie zur Speicherung im Energiespeicher umwandelt.

Wird am Energieanschluss hingegen Energie in thermischer Form geliefert, beispielsweise in Form von Wasserdampf, umfasst der Energiewandler mit Vorteil eine Turbine, die sich mit dem Wasserdampf betreiben lässt und auf diese Weise elektrische Energie produziert.

Die am Energieanschluss empfangene Energie kann aber natürlich auch elektrische Energie sein, die sich direkt im Energiespeicher speichern lässt. In einem anderen Beispiel wird elektrische Energie aber z.B. in Form einer Wechselspannung am Energieanschluss angeliefert. Ist der Energiespeicher in diesem Fall eine Batterie, müsste die empfangene elektrische Energie vor der Speicherung noch in eine Gleichspannung umgewandelt werden.

In einem bevorzugten Ausführungsbeispiel der Erfindung wird die Energie allerdings in Form von kinetischer Energie angeliefert. Diese kinetische Energie stammt beispielsweise von einem Fahrzeug, mit welchem der Transportbehälter transportiert wird und mit welchem Transportbehälter die Energieversorgungsanordnung verbunden ist. Mittels Windrädern oder ähnlichen Elementen könnte beispielsweise die Bewegungsenergie des Fahrzeugs, d.h. der Geschwindigkeitsunterschied zwischen Fahrzeug und Umgebungsluft genutzt werden. Allerdings hängt die produzierbare Energiemenge hierbei stark von den Umweltbedingungen, konkret von den Windverhältnissen ab und ist damit schwer berechenbar. Vorzugsweise wird daher die Rotationsenergie eines rotierenden Elements des Fahrzeugs wie etwa die Rotationsenergie einer Achse oder eines Rades des Fahrzeugs genutzt. Diese Quellenergie steht zwar auch nur dann zur Verfügung, wenn sich das Fahrzeug bewegt, ist aber unabhängig von anderen, in der Regel nicht beeinflussbaren Bedingungen wie dem Wetter. Entsprechend umfasst der Energiewandler mit Vorteil einen Generator zur Umwandlung einer Rotationsenergie eines rotierenden Elements des Fahrzeugs in elektrische Energie.

Der Energiewandler kann zu diesem Zweck beispielsweise eine Anordnung von Wellen, Kupplungen und Getrieben etc. umfassen, mit welcher die Rotationsenergie mechanisch zum Energieanschluss übertragen werden kann. Der Energiewandler umfasst dann weiter einen Generator, mit welchem diese Rotationsenergie in elektrische Energie umwandelbar ist. Eine derartige mechanische Übertragung ist allerdings aufwändig zu realisieren und damit teuer. Sie umfasst auch eine Vielzahl von beweglichen Teilen, sodass auch ein erhöhtes Risiko besteht, Personen oder Gegenstände, die in die Nähe des Fahrzeugs gelangen, zu verletzen bzw. zu beschädigen. Eine andere Möglichkeit besteht darin, den Generator derart am Fahrzeug an einer Radachse oder an einem Rad bzw. derart in deren Nähe anzubringen, dass der Generator direkt die Rotation der Achse oder des Rades nutzen kann, um elektrische Energie zu erzeugen, welche dann mittels Stromkabeln zum Energieanschluss übertragen oder auch direkt genutzt werden kann, um den Energiespeicher zu laden. Je nach Länge und Anordnung dieser Stromkabel besteht jedoch die Gefahr, dass andere elektrische oder elektronische Geräte oder Bauteile durch die von den in den Kabeln fliessenden Ströme erzeugten Felder gestört oder beeinflusst werden können. Dies ist in der Regel unerwünscht. Insbesondere wenn solche Stromkabel an der Achse eines Containertragwagens montiert werden, könnte es zu unerwünschten Störungen der Bahntechnik am Containertragwagen oder auch entlang der Geleise kommen.

Bei einem bevorzugten Ausführungsbeispiel der Erfindung umfasst der Energiewandler daher einen Hydraulikgenerator zur Umwandlung der Rotationsenergie einer Radachse eines Fahrzeugs in elektrische Energie. Der Hydraulikgenerator wiederum umfasst eine Hydraulikpumpe sowie einen Elektrogenerator. Während der Elektrogenerator an der Montagevorrichtung befestigt ist, ist die Hydraulikpumpe an der Radachse befestigbar und über Hydraulikschläuche mit dem Elektrogenerator verbindbar. Die Hydraulikpumpe pumpt mit Hilfe der Rotation der Radachse eine Hydraulikflüssigkeit durch einen Schlauch zum Generator und durch einen anderen Schlauch wieder zurück zur Hydraulikpumpe, wo sich der Kreislauf der Hydraulikflüssigkeit wieder schliesst. Der Flüssigkeitsstrom der Hydraulikflüssigkeit im Generator versetzt beispielsweise den Rotor des Elektrogenerators in Rotation, sodass im Zusammenwirken mit dem Stator des Elektrogenerators Strom erzeugt wird. Dies kann ein Wechselstrom sein oder auch ein Gleichstrom, der sich dann im Energiespeicher speichern lässt.

Mit einem solchen Energiewandler kann die Rotationsenergie einer Radachse auf einfache und effiziente Art und Weise in elektrische Energie zur Speicherung im Energiespeicher umgewandelt werden.

Wie bereits weiter oben erwähnt, kann auch elektrische Energie in vielerlei Formen vorliegen. D.h. sie kann als Wechselstrom mit unterschiedlichen Amplituden und Frequenzen vorliegen, sie kann aber auch als Gleichstrom mit unterschiedlicher Spannung vorliegen. Zum Speichern in einem bestimmten Energiespeicher, d.h. beispielsweise in einer bestimmten Art von Batterie, muss die elektrische Energie typischerweise in einer bestimmten Form vorliegen. Bei Batterien ist dies in der Regel ein Gleichstrom, mit welchem die Batterie je nach Stromstärke schneller oder langsamer geladen werden kann.

Meist stimmt die Form der am Energieanschluss angelieferten oder vom Energiewandler erzeugten elektrischen Energie nicht mit der zum Laden des Energiespeichers notwendigen Form elektrischer Energie überein. Mit Vorteil umfasst die Energieversorgungsanordnung daher einen Stromrichter zur Umwandlung der am Energieanschluss angelieferten oder vom Energiewandler erzeugten elektrischen Energie in eine zum Laden des Energiespeichers geeignete Form elektrischer Energie.

Der Stromrichter ist derart ausgebildet, dass er zur Umwandlung eines zum Laden einer Batterie ungeeigneten Gleichstroms in einen anderen, zum Laden der Batterie geeigneten Gleichstrom als Gleichspannungswandler dient. Da elektrische Energie jedoch häufig in Form eines Wechselstromes erzeugt wird, insbesondere wenn sie durch eine Drehbewegung bzw. Rotation erzeugt wird, ist der Stromrichter mit Vorteil als Gleichrichter ausgebildet, zur Umwandlung eines Wechselstroms in einen zum Laden der Batterie geeigneten Gleichstrom.

Der Stromrichter dient jedoch nicht nur zur Umwandlung der vom Energiewandler bereitgestellten Energie zur Speicherung im Energiespeicher, er ist vorzugsweise auch ausgebildet zur Umwandlung der vom Energiewandler bereitgestellten elektrischen Energie in eine zum Betrieb des Energieverbrauchers nutzbare und am Lastanschluss ausgebbare Form elektrischer Energie. Da die meisten Energieverbraucher Strom in Form eines Wechselstromes benötigen, ist der Stromrichter vorzugsweise derart ausgebildet, dass er einen vom Energiewandler angelieferten Wechselstrom in einen zum Betrieb des Energieverbrauchers nutzbaren Wechselstrom umwandelt. Je nach Art der vom Energiewandler gelieferten elektrischen Energie bzw. der für den Betrieb des Energieverbrauchers benötigten Form elektrischer Energie kann der Stromrichter natürlich auch für eine Umwandlung von Gleich- in Gleichstrom, Gleich- in Wechselstrom bzw. Wechsel- in Gleichstrom ausgebildet sein. Der Stromrichter kann dabei als eine Einheit ausgebildet sein, die sämtliche der benötigten Umwandlungen durchführen kann, wobei dies durch eine einzige, multifunktionale Schaltung oder durch mehrere einzelne, spezifisch ausgebildete Schaltungen erfolgen kann, welche in einer gemeinsamen Geräteeinheit untergebracht sind. Der Stromrichter kann aber auch mehrere Einheiten umfassen, von denen jede eine oder mehrere der benötigten Umwandlungen übernimmt, und welche in geeigneter Weise gesteuert werden. Es ist natürlich auch möglich, im Energiewandler eine Stromwandlung vorzusehen, sei es eine AC/DC-, AC/AC-, DC/DC-oder auch DC/AC Wandlung.

In einer bevorzugten Ausführungsform der Erfindung umfasst die Energieversorgungsanordnung einen Netzanschluss zum Anschliessen einer externen elektrischen Energiequelle. Eine solche externe elektrische Energiequelle ist beispielsweise ein Stromversorgungsnetz, wie es häufig an Orten zur Verfügung steht, wo Transportfahrzeuge bzw. Transportbehälter beispielsweise kurzfristig oder über mehrere Stunden oder auch über Tage oder noch längere Zeiträume abgestellt werden. In solchen Container- oder LKW-Terminals stehen solche externen Stromnetze häufig zur Verfügung, ebenso wie in Bahnhöfen oder Güterbahnhöfen, wo derartige Transport-Bahnwagen kurz- oder längerfristig häufig abgestellt werden.

Solche Stromnetze liefern in der Regel eine ortsübliche Form von Wechselstrom, in der Schweiz und in einigen anderen Teilen Europas ist dies beispielsweise ein drei-phasiges Wechselstromnetz mit drei Phasenleitern, einem Nullleiter und meist einem Erdleiter. Wird kein Drehstrom benötigt, reicht auch nur ein ein-phasiges Wechselstromnetz. In den oben genannten Regionen beträgt die Spannung einer Phase gegenüber dem Nullleiter typischerweise 240 Volt Wechselspannung und die Spannung zwischen zwei Phasenleitern typischerweise 400 Volt Wechselspannung. Dies jeweils bei einer Netzfrequenz von z.B. 50 oder 60 Hertz.

Die Energieversorgungsanordnung bzw. deren Ladevorrichtung ist dabei insbesondere zum Speichern von an dem Netzanschluss empfangener elektrischer Energie im Energiespeicher ausgebildet. Mit Vorteil ist die Energieversorgungsanordnung auch ausgebildet zur direkten Versorgung eines am Lastanschluss angeschlossenen Energieverbrauchers mit an dem Netzanschluss empfangener elektrischer Energie
Ist ein derartiger Netzanschluss vorhanden, kann die Energieversorgungsanordnung bzw. der Transportbehälter, mit welchem sie verbunden ist, bei jedem kürzeren oder auch längeren Transportunterbruch an ein solches externes Stromversorgungsnetz angeschlossen werden und mit dessen Energie nicht nur den Energiespeicher wieder füllen, sondern während dieser Zeit auch den Energieverbraucher mit der benötigten Energie aus dem Netz versorgen.

Es ist natürlich auch möglich, die Energieversorgungsanordnung stationär zu verwenden, beispielsweise an einem Ort, wo derartige Transportbehälter gelagert werden, ob nun leer oder beladen. Die Energieversorgungsanordnung kann hierfür beispielsweise fest am Boden oder auf entsprechenden Gestellen zur Aufnahme von passenden Transportbehältern lösbar oder auch fix montiert werden.

Über den Netzanschluss kann natürlich nicht nur Energie empfangen werden, es ist auch möglich, die am Energieanschluss empfangene Energie oder die im Energiespeicher gespeicherte Energie über den Netzanschluss in das angeschlossene Netz einzuspeisen.

Wie bereits erwähnt, kann der Energieverbraucher ein beliebiges Gerät, eine Apparatur, eine Beleuchtung oder sonst eine Vorrichtung sein, die mit elektrischem Strom betrieben werden kann. Der Energieverbraucher muss auch nicht unbedingt ein Teil des Transportbehälters sein oder an, im oder auf dem Transportbehälter angeordnet sein. Es kann sich beispielsweise auch um ein Gerät oder eine andere Vorrichtung handeln, die etwa Teil des Fahrzeugs ist oder am Fahrzeug angeordnet ist. Der Energieverbraucher kann z. B. aber auch ein Energieverbraucher wie z.B. eine Beleuchtung eines Terminals zur Zwischenlagerung von Transportbehältern oder den entsprechenden Transportfahrzeugen sein.

Bei einer bevorzugten Ausführungsform der Erfindung ist der Energieverbraucher allerdings am oder im Transportbehälter angeordnet und umfasst insbesondere eine Temperiervorrichtung, mit welcher das Ladevolumen des Transportbehälters auf eine bestimmte Temperatur gebracht werden kann. Häufig handelt es sich dabei um eine Kühlvorrichtung, eine Heizvorrichtung oder eine kombinierte Kühl- und Heizvorrichtung wie beispielsweise eine Klimaanlage.

Eine solche Temperiervorrichtung umfasst in der Regel ein elektrisch betreibbares Kühl- und/oder Heizaggregat, welches dann mit der von der Energieversorgungsanordnung bereitgestellten Energie betrieben werden kann.

Wie schon erwähnt, gibt es beliebig viele Arten und Typen von Transportbehältern, welche mit einer erfindungsgemässen Energieversorgungsanordnung ausgestattet werden können. Hierzu muss lediglich die Verbindungsvorrichtung der Montagevorrichtung auf die Befestigungs- bzw. Verbindungsvorrichtung des Transportbehälters abgestimmt werden, damit er mit dieser kompatibel ist. Bei Transportbehälter-Arten, die häufig verwendet werden, lohnt sich der Aufwand, entsprechende Montagevorrichtungen herzustellen. Bei Transportbehälter-Arten, die nicht häufig verwendet werden, kann es sein, dass es sich kaum lohnt, entsprechende Montagevorrichtungen bereitzustellen.

Die eingangs erwähnten Container, insbesondere jene gemäss der ISO-Norm 668, gehören zu den am häufigsten verwendeten Transportbehältern für den Transport von Fracht sowohl im nationalen wie auch im internationalen Transportverkehr und insbesondere im multimodalen Verkehr, d.h. beim Transport solcher Container mit mindestens zwei verschiedenen Transportfahrzeugen. Vor allem im intermodalen Verkehr, bei welchem Gütern in ein und derselben Ladeeinheit mit mindestens zwei Verkehrsträgern transportiert werden, kann die Erfindung besonders gut eingesetzt werden. Dies gilt aber vor allem auch im kombinierten Verkehr, bei welchem ein möglichst grosser Teil der Transportstrecke mit der Eisenbahn oder mit einem Schiff absolviert wird und der Vor- und Nachlauf auf der Straße so kurz wie möglich gehalten wird.

Bei einer bevorzugten Ausführungsform der Erfindung ist der Transportbehälter folglich ein derartiger Container und entsprechend ist die erste Verbindungsvorrichtung zur lösbaren Verbindung der Montagevorrichtung mit einem solchen Container auf die Befestigungs- bzw. Verbindungsvorrichtungen solcher Container zur Verbindung mit einem passenden Fahrzeug oder einem bauähnlichen Container angepasst. Dies ermöglicht eine flexible Nutzung der Erfindung mit einer Vielzahl verschiedener solcher Container, insbesondere solcher Container gemäss der erwähnten ISO-Norm. Solche Container können mit den unterschiedlichsten Fahrzeugen transportiert werden, welche hierfür auch entsprechend ausgerüstet sind, d.h. die entsprechenden Verbindungsvorrichtungen aufweisen.

Bei dem Energiespeicher handelt es sich wie schon erwähnt vorzugsweise um eine Batterie. Dabei kann es sich um eine Batterie handeln, die eine bestimmte, im Voraus festgelegte Kapazität aufweist, und die in der Energieversorgungsanordnung verbaut ist. Wenn in einem solchen Fall die Anforderungen an die Energieversorgungsanordnung ändern, beispielsweise dass ein anderer Energieverbraucher mit einem höheren Energieverbrauch versorgt werden soll, kann die Batterie durch eine Batterie höherer Kapazität ersetzt werden.

Es ist jedoch einfacher und daher auch bevorzugt, dass der Energiespeicher modular ausgebildet ist und entsprechend eine Mehrzahl von Akkumulator-Zellen umfasst, sodass die Anzahl der einzelnen Zellen und damit die Kapazität des Energiespeichers jeweils flexibel an die gerade benötigte elektrische Leistung angepasst werden kann. Dabei werden jedoch typischerweise nicht einzelne Akkumulator-Zellen hinzugefügt oder weggenommen, sondern eine bestimmte Anzahl von Akkumulator-Zellen wird vorzugsweise zu Gruppen zusammengeschaltet, wobei jede Gruppe von Zellen einen Block bildet und diese Blöcke modular hinzugefügt oder entfernt werden können. Oder diese Blöcke sind zu noch grösseren Gruppen, im Folgenden als Akkumulator-Module bezeichnete Einheiten, zusammengefasst, welche ihrerseits modular hinzugefügt oder entfernt werden können. Auf diese Weise lässt sich die Kapazität der Batterie einfach und flexibel an die für den Transport bestimmter Waren benötigte elektrische Energie anpassen.

Die Montagevorrichtung umfasst wie bereits erwähnt eine erste Verbindungsvorrichtung zur lösbaren Verbindung der Montagevorrichtung mit einer Befestigungsvorrichtung eines Transportbehälters zur Verbindung des Transportbehälters mit einem gleichartigen Transportbehälter bzw. mit einem Fahrzeug. Zudem kann die Montagevorrichtung auch eine zweite Verbindungsvorrichtung umfassen zur lösbaren Verbindung der Montagevorrichtung mit einer Befestigungsvorrichtung eines Fahrzeugs zur Verbindung des Fahrzeugs mit dem Transportbehälter.

Damit die erfindungsgemässe Energieversorgungsanordnung beim Transport von mit Energie zu versorgenden Transportbehältern möglichst einfach und flexibel eingesetzt werden kann, ist die Montagevorrichtung mit Vorteil als Rahmen, nachfolgend als Adapterrahmen bezeichnet, ausgebildet. Dieser Adapterrahmen ist zwischen einem Fahrzeug und einem für den Transport mit dem Fahrzeug zu transportierenden Transportbehälter anbringbar , wobei die jeweiligen Befestigungs- bzw. Verbindungsvorrichtungen genutzt werden. Der Adapterrahmen weist vorzugsweise eine rechteckige Grundgestalt auf, mit einer Länge und einer Breite, welche im Wesentlichen einer Länge und einer Breite des Transportbehälters entspricht bzw. auf die vorhandenen Befestigungs- bzw. Verbindungsvorrichtungen angepasst ist. Der Adapterrahmen hat weiter eine im Vergleich zu Länge und Breite geringe Höhe. Diese Höhe wird dabei vorzugsweise so gewählt, dass die Gesamthöhe von Adapterrahmen und Transportbehälter die erlaubte Gesamthöhe der Ladung des entsprechenden Transportfahrzeugs nicht überschreitet. Viele der oben erwähnten 20 oder 40 Fuss langen ISO-Container haben beispielsweise eine Höhe von 8.6 Fuss, was einer Höhe von knapp 2.60 Metern entspricht. Um bei solchen Containern die erlaubte Gesamthöhe, beispielsweise beim Transport auf der Schiene mit Containertragwagen nicht zu überschreiben, beträgt die Höhe des Adapterrahmens insbesondere nicht mehr als 25 cm und vorzugsweise nicht mehr als 11 cm.

Die Energieversorgungsanordnung kann für einen autonomen Betrieb ausgebildet sein. Sie kann beispielsweise derart ausgebildet sein, dass sie ohne eine Regelung bzw. Steuerung einer vorhandenen Kühlvorrichtung auskommt und diese mit einer bestimmten Menge an Strom versorgt, solange dieser verfügbar ist. Dabei kann es allerdings vorkommen, dass die Fracht je nach Umweltbedingungen zu stark oder zu wenig gekühlt wird. Die Energieversorgungsanordnung umfasst daher bevorzugt eine Steuervorrichtung zur Steuerung eines Energieflusses zwischen Netzanschluss, Energiewandler, Energiespeicher und einem am Lastanschluss angeschlossenen Energieverbraucher. Auf diese Weise kann der Energieverbraucher in Abhängigkeit seines Energiebedarfs jeweils mit mehr oder weniger Energie versorgt werden.

In diesem Zusammenhang ist zu erwähnen, dass der Lastanschluss insbesondere zum Anschliessen mehrerer Energieverbraucher ausgebildet und die Steuervorrichtung entsprechend auch zur Steuerung eines Energieflusses zwischen Netzanschluss, Energiewandler, Energiespeicher und mehreren bzw. allen am Lastanschluss angeschlossenen Energieverbrauchern ausgebildet ist. Es ist zu beachten, dass der Lastanschluss auch unabhängig vom Vorhandensein einer Steuervorrichtung zum Anschliessen mehrerer Energieverbraucher ausgebildet sein kann.

Da es vorkommen kann, dass in dem Energiespeicher keine Energie mehr gespeichert ist, umfasst die Energieversorgungsanordnung vorzugsweise eine Hilfs-Energiequelle, beispielsweise eine zusätzlich zum Energiespeicher vorhandene Hilfsbatterie. Diese dient dabei für einen Systemerhalt der Energieversorgungsanordnung, wenn der Energiespeicher leer ist oder auch aus anderen Gründen. Sie dient beispielsweise auch zum Aufstarten der Energieversorgungsanordnung aus einem Schlafmodus, der vorgesehen sein kann, wenn die Energieversorgungsanordnung über eine bestimmte Zeit nicht verwendet wird oder welcher auch manuell initiiert werden kann, wenn sie nicht benötigt wird.

Beim Transport von Waren, bei welchen bestimmte Transportbedingungen eingehalten werden müssen, ist es in der Regel wichtig, sicherzustellen, dass diese Transportbedingungen auch tatsächlich während des gesamten Transports eingehalten werden. Dies beispielsweise, um zu verhindern, dass Lebensmittel verderben oder wie oben erwähnt zu früh reifen.

Die Energieversorgungsanordnung umfasst daher mit Vorteil eine Überwachungseinrichtung zur Überwachung eines mit der Energieversorgungsanordnung verbundenen Transportbehälters. Diese Überwachung betrifft beispielsweise die Temperatur an einem oder mehreren Orten innerhalb des Transportbehälters oder die Einhaltung einer bestimmten Gasatmosphäre im Transportbehälter. Sie kann beispielsweise aber auch dazu dienen, die Position des Transportbehälters zu überwachen, um ihn bei Bedarf lokalisieren zu können. Dies ist nicht nur hilfreich, wenn der Fortschritt des Transports überwacht werden soll, sondern auch wenn der Transportbehälter aus welchen Gründen auch immer nicht dort ist, wo er sein sollte, sei es durch Verlust oder auch Diebstahl. Die Überwachungseinrichtung ist dabei vorzugsweise zum Empfangen und Verarbeiten von Signalen ausgebildet, welche von am oder im Transportbehälter angeordneten Sensoren stammen, die zur Überwachung von mit dem Transportbehälter transportierter Fracht dienen.

Die Überwachungseinrichtung kann selbstverständlich auch weitere Funktionen übernehmen wie etwa die Überwachung des Containers oder auch der Energieversorgungsanordnung selber.

Damit die Energieversorgungsanordnung auch mit anderen Einheiten, beispielsweise anderen Energieversorgungsanordnungen oder einer Zentralstelle, kommunizieren kann, d.h. Signale wie z. B. Steuer- oder Überwachungssignale senden und/oder empfangen kann, umfasst sie bei einem bevorzugten Ausführungsbeispiel der Erfindung eine Kommunikationsvorrichtung zum Senden und/oder Empfangen von solchen Signalen. Grundsätzlich kommt hierfür jede Kommunikationsvorrichtung in Frage, welche für den Austausch solcher Signale geeignet ist, darunter auch drahtgebundene Kommunikationsvorrichtungen, welche z. B. per Kabel mit einem entsprechenden Station an einem Terminal etc. verbunden wird und dann über dieses Kabel Daten austauschen kann. Ein Beispiel hierfür wäre etwa ein LAN, an welches die Kommunikationsvorrichtung angeschlossen werden kann. Da ein Transportbehälter aber oft eben nicht stationär, sondern in Bewegung ist, ist die Kommunikationsvorrichtung vorzugsweise für eine drahtlose und insbesondere bidirektionale Kommunikation ausgebildet. Sie verfügt hierzu beispielsweise über ein Mobilfunk-Modul wie es bei modernen Mobiltelefonen zum Einsatz kommt - beispielsweise ein GSM Modul - oder über eine andere Vorrichtungen für eine drahtlose Kommunikation wie etwa WLAN oder Bluetooth oder, z.B. in Gegenden ohne oder mit nur schlechter Mobilfunkabdeckung, über ein Modul für die Satellitenkommunikation. Es ist natürlich aber auch jede andere Technik zur drahtlosen Datenübertragung nutzbar und auch eine Kombination verschiedener Techniken ist möglich. So könnte beispielsweise eine auf einem Tragwagen befestigte Energieversorgungsanordnung ein GSM-Modul umfassen, wobei diese Energieversorgungsanordnung mit anderen, auf demselben Tragwagen oder einem anderen Tragwagen des betreffenden Zuges befestigten Energieversorgungsanordnungen mittels WLAN kommuniziert.

Die Lösung der Aufgabe in Bezug auf einen Transportbehälter ist durch die Merkmale des Anspruchs 15 definiert. Der Transportbehälter umfasst eine Befestigungsvorrichtung zur lösbaren Verbindung des Transportbehälters mit einem gleichartigen Transportbehälter bzw. mit einem Fahrzeug. Gemäss der Erfindung ist nun eine Energieversorgungsanordnung wie vorgängig beschrieben lösbar mit dem Transportbehälter verbunden, und zwar mittels der ersten Verbindungsvorrichtung der Energieversorgungsanordnung, welche mit der Befestigungsvorrichtung des Transportbehälters zusammenwirkt.

Die Lösung der Aufgabe in Bezug auf ein Fahrzeug ist durch die Merkmale des Anspruchs 16 definiert. Das Fahrzeug umfasst eine Befestigungsvorrichtung zur lösbaren Verbindung des Fahrzeugs mit einem Transportbehälter. Gemäss der Erfindung ist nun eine Energieversorgungsanordnung wie vorgängig beschrieben lösbar mit dem Fahrzeug verbunden und zwar mittels einer zweiten Verbindungsvorrichtung, welche mit der Befestigungsvorrichtung des Fahrzeugs zusammenwirkt.

Das Fahrzeug ist hierbei entweder ein Schienenfahrzeug, ein Kraftfahrzeug wie etwa ein LKW oder ein Wasserfahrzeug wie beispielsweise ein Schiff. Es kann grundsätzlich allerdings auch ein anderes Fahrzeug wie z.B. ein Luftfahrzeug sein, welches über eine entsprechende Befestigungsvorrichtung verfügt.

Die Lösung der Aufgabe in Bezug auf das Verfahren zur Energieversorgung eines Energieverbrauchers mit einer Energieversorgungsanordnung wie vorgängig beschrieben ist durch die Merkmale des Anspruchs 17 definiert. Gemäss der Erfindung wird die Montagevorrichtung der Energieversorgungsanordnung mittels ihrer ersten Verbindungsvorrichtung mit der Befestigungsvorrichtung eines Transportbehälters verbunden, der Energieverbraucher, der vorzugsweise ein am oder im Transportbehälter angeordneter Energieverbraucher ist, wird an den Lastanschluss der Energieversorgungsanordnung angeschlossen und mit im Energiespeicher der Energieversorgungsanordnung gespeicherter Energie versorgt.

In einer bevorzugten Ausführungsform des erfindungsgemässen Verfahrens wird am Energieanschluss weiter eine Energiequelle angeschlossen, elektrische Energie am Energieanschluss empfangen und mit der Ladevorrichtung im Energiespeicher gespeichert.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Ein Blockdiagramm einer erfindungsgemässen Energieversorgungsanordnung;
- Fig. 2: ein Blockdiagramm einer zweiten Ausführungsform einer erfindungsgemässen Energieversorgungsanordnung;
- Fig. 3: eine schematische Darstellung eines Adapterrahmens einer erfindungsgemässen Energieversorgungsanordnung zur Montage der einzelnen Komponenten der Energieversorgungsanordnung;
- Fig. 4: der Adapterrahmen aus Figur 3 mit montierten Komponenten;
- Fig. 5: der Adapterrahmen aus Figur 3 mit einem grösseren Energiespeicher;
- Fig. 6: eine detailliertere, schematische Darstellung eines Akkumoduls des Energiespeichers;
- Fig. 7: ein Akku-Block des Energiespeichers;
- Fig. 8: eine schematische Darstellung einer Radachse eines Containertragwagens mit daran montierter Hydraulikpumpe;
- Fig. 9: eine schematische Darstellung der Verbindungsvorrichtung eines Containers;
- Fig. 10: eine schematische Darstellung eines Verbindungselements eines Containers;
- Fig. 11: eine zapfenförmige Befestigungsvorrichtung zur Befestigung eines Containers auf einem Fahrzeug;
- Fig. 12: eine schematische Darstellung eines Transportbehälters;
- Fig. 13: eine schematische Darstellung eines Containertragwagens;
- Fig. 14: der Containertragwagen aus Figur 9 mit montierten Adapterrahmen und Containern sowie
- Fig. 15: eine schematische Darstellung eines Lastkraftwagens mit montiertem Adapterrahmen und Container.

Grundsätzlich sind in den Figuren gleiche Teile mit gleichen Bezugszeichen versehen.

### Wege zur Ausführung der Erfindung

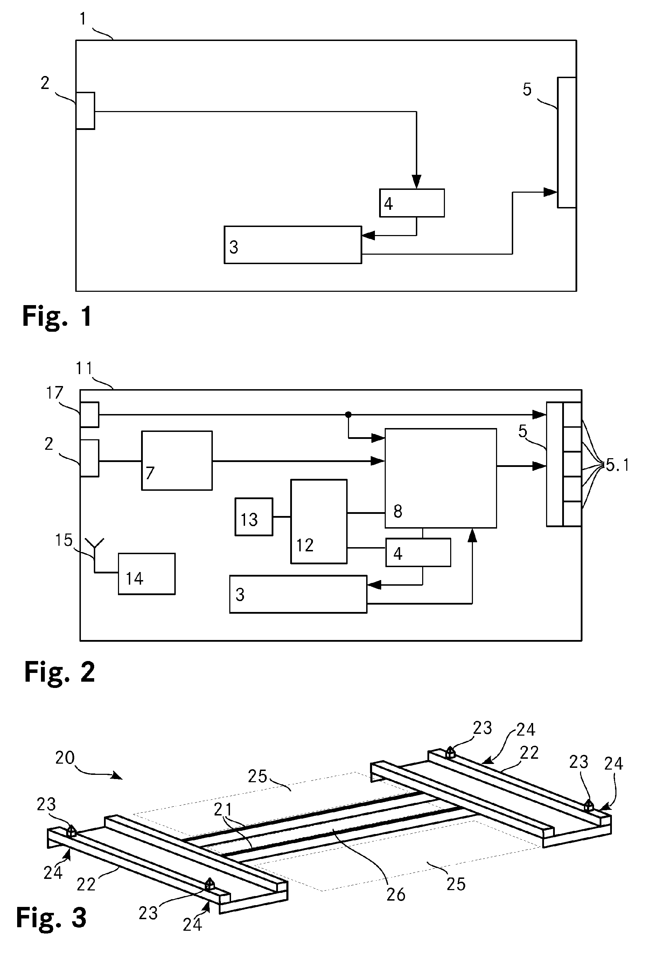

Figur 1 zeigt ein Blockdiagramm einer erfindungsgemässen Energieversorgung 1. Diese umfasst einen Energieanschluss 2, eine Batterie 3, eine Ladevorrichtung 4, mit welcher die am Energieanschluss 2 empfangene Energie in Form von elektrischer Energie in der Batterie gespeichert werden kann, sowie einen Lastanschluss 5, an dem die in der Batterie 3 gespeicherte Energie ausgegeben werden kann. Ein Energieverbraucher muss lediglich noch am Lastanschluss der Energieversorgung 1 angeschlossen werden, damit er mit der in der Batterie 3 gespeicherten Energie betrieben werden kann.

Figur 2 zeigt ein Blockdiagramm einer zweiten, ausführlicheren Ausführungsform einer erfindungsgemässen Energieversorgung 11. Die am Energieanschluss 2 angelieferte Energie wird allerdings nicht mehr direkt von der Ladevorrichtung 4 in der Batterie 3 gespeichert, sondern sie wird zuerst einem Generator 7 zugeführt, der sie in elektrische Energie umwandelt. Ein Stromrichter 8 wiederum wandelt die Ausgangsenergie des Generators 7 in eine zum Laden der Batterie 3 mit der Ladevorrichtung 4 geeignete Form elektrischer Energie um. Die in der Batterie gespeicherte Energie wiederum wird via Stromrichter 8 auf den Lastanschluss 5 geführt, der mehrere Ausgänge 5.1 umfasst, an denen mehrere Energieverbraucher angeschlossen werden können.

Weiter umfasst die Energieversorgung 11 eine Steuerung 12 mit zugehörigem Hilfsakku für den Systemstart und die Systemerhaltung der Steuerung 12. Die Steuerung 12 dient zur Steuerung der verschiedenen Energieflüsse, die via den Stromrichter 8 geführt werden. D.h. die Steuerung steuert sowohl den Energiefluss vom Energieanschluss 2 zur Ladevorrichtung 4 und weiter zur Batterie 3 wie auch den Energiefluss von der Batterie 2 via den Stromrichter 8 zu dem oder den am Lastanschluss 5 angeschlossenen Energieverbrauchern. Die Steuerung 12 übernimmt insbesondere das Akku- bzw. Batterie-Management.

Die Energieversorgung 11 umfasst weiter noch ein Überwachungsmodul 14 welches mit einer Antenne 15 verbunden ist bzw. eine solche umfasst und über welche es Daten drahtlos mit anderen Kommunikationspartnern austauschen kann. Die Steuerung 12 kann mit dem Überwachungsmodul zusammen auch eine eigene Einheit bildet. Dabei können auch weitere Komponenten wie z.B. der Stromrichter samt seinen funktionellen Einheiten oder auch die Ladevorrichtung in diese Einheit integriert sein.

Die Energieversorgung 11 umfasst schliesslich noch einen Netzanschluss 17, via welchen die Energieversorgung 11 an ein externes Stromversorgungsnetz angeschlossen werden kann. Die Energie aus einem solchen Netz kann dann entweder direkt zur Speisung der am Lastanschluss 5 angeschlossenen Energieverbraucher genutzt werden, oder sie wird, gesteuert von der Steuerung 12, zur Speicherung in der Batterie 3 verwendet.

Figur 3 zeigt eine schematische Darstellung einer Montagevorrichtung, hier in der Form eines Adapterrahmens 20. Dieser umfasst zwei parallel und in einem Abstand zueinander angeordnete Längsträger 21, welche an ihren Enden durch je einen Querträger 22 miteinander verbunden sind, wobei die Querträger 22 deutlich länger sind als der Abstand zwischen den beiden Längsträgern 21, d.h. seitlich deutlich über die Längsträger 21 hinausragen. Dies ergibt eine Art Doppel-T-Rahmen, wobei der Raum zwischen den beiden Querträgern 22, durch die beiden Längsträger 21 in drei Teilbereiche unterteilt wird. In zwei Seitenbereiche 25 von den Längsträgern 21 her nach aussen sowie in einen Mittelbereich 26 zwischen den beiden Längsträgern 21. Die beiden Seitenbereiche 25 und der Mittelbereich 26 können somit zur Befestigung von diversen Komponenten der Energieversorgung 11 genutzt werden. Weitere Komponenten können auch in der gewählten Darstellung unten am Adapterrahmen 20 befestigt werden, sofern sie derart platziert werden, dass sie einer Montage des Adapterrahmens auf einem Fahrzeug wie etwa einem Bahnwagen oder einem LKW nicht entgegenstehen. Ein solcher Adapterrahmen 20 kann auch weitere Elemente wie etwa Längs- oder Querstreben umfassen, die beispielsweise die Stabilität des Rahmens erhöhen. Ein solcher Adapterrahmen kann grundsätzlich auch anders aufgebaut sein, beispielsweise aus einem einfachen Rechteck bestehen.

An den äusseren Enden der beiden Querträger 22, d.h. in den Ecken des vom Adapterrahmen 20 aufgespannten Rechtecks, ist jeweils ein Zapfen 23 angeordnet, wobei die Anordnung der Zapfen 23, derjenigen auf einem Containertragwagen oder einem Lastkraftwagen zur Ablage eines Containers für dessen Transport entspricht. Auf der Unterseite des Adapterrahmens 20 sind direkt unter jedem Zapfen 23 Öffnungen 24 vorhanden, mit welchen der Adapterrahmen 20 auf einem derartigen Containertragwagen oder einem Lastkraftwagen aufgesetzt werden kann. Diese Zapfen bzw. Öffnungen entsprechen den weiter oben eingeführten Verbindungsvorrichtungen zur Verbindung der Montagevorrichtung mit einem Fahrzeug bzw. einem Container.

Der Adapterrahmen 20 ist so konstruiert, dass, wenn er auf einem Tragwagen montiert ist, ein darauf befestigter Container höchstens 11 cm höher zu liegen kommt, als wenn der Container direkt auf dem Tragwagen befestigt wäre. Dies wird am einfachsten dadurch erreicht, dass die Höhe des Adapterrahmens 20, 11 cm oder weniger beträgt, und zwar ohne die nach oben über die Längsträger 21 bzw. Querträger 22 überstehenden Zapfen 23. Auf diese Weise ist gewährleistet, dass der Container nicht zu hoch liegt.

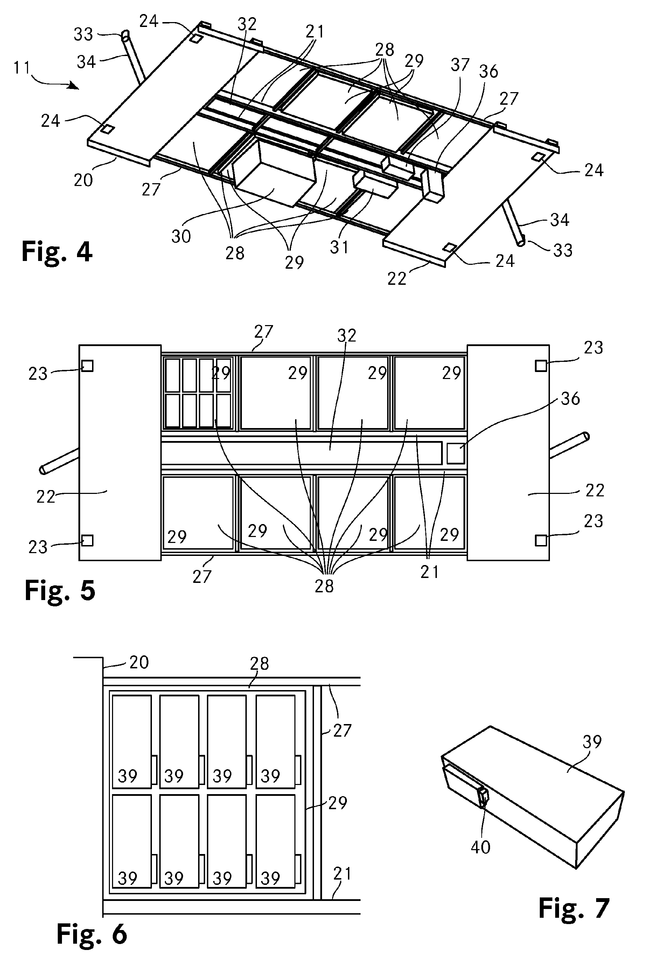

Figur 4 zeigt eine Energieversorgung 11, deren Komponenten an einem Adapterrahmen 20 wie er in Figur 3 gezeigt ist, befestigt sind. Figur 4 zeigt den Adapterrahmen 20 von schräg unten. Die beiden in Figur 3 identifizierten Seitenbereiche 25 werden hier zur Unterbringung der Batterie genutzt. Hierfür wird in den beiden Seitenbereichen 25 je ein Halterahmen 27 befestigt, beispielsweise verschraubt, wobei jeder Halterahmen vier gleich grosse Montageplätze 28 für jeweils ein Akkumodul 29 umfasst. Insgesamt könnten auf diese Weise acht Akkumodule 29 im Adapterrahmen 20 untergebracht werden, wobei in dem in Figur 4 dargestellten Beispiel in den beiden mittleren Montageplätzen jedes Halterahmens 27 je ein Akkumodul 29 montiert ist; insgesamt also vier Akkumodule 29. Die einzelnen Akkumodule 29 sind jeweils in einem eigenen, wasserdichten Gehäuse untergebracht und miteinander bzw. mit der Steuerung verbunden.

An dem Adapterrahmen 20 sind weitere Module der Energieversorgung 11 untergebracht. An der Unterseite des Adapterrahmens 20 ist beispielsweise ein wasserfestes Gehäuse 30 aus Stahl befestigt, in welchem mehrere Komponenten der Energieversorgung 11 untergebracht sind. In dem dargestellten Beispiel sind dies beispielsweise die Steuerung samt Hilfsbatterie, die Ladevorrichtung wie auch der Stromrichter. Der Stromrichter weist in diesem Fall beispielsweise eine Leistung von 10 bis 30 kW auf. Weiter ist auf der Unterseite des Adapterrahmens 20 ein Generator 31 mit Hydraulikantrieb befestigt. Der Generator 31 bzw. dessen vorgeschalteter Hydraulikantrieb (Hydraulikmotor) ist mit einer an der Radachse eines Fahrzeugs montierten Hydraulikpumpe verbunden bzw. verbindbar (hier nicht dargestellt), welche den Fluss der Hydraulikflüssigkeit zum Antrieb des Generators 31 liefert. Am Adapterrahmen 20 ist weiter ein Tank 36 sowie ein Kühler 37 für die Hydraulikflüssigkeit befestigt, welche ebenfalls in den Kreislauf der Hydraulikflüssigkeit eingebunden, d. h. typischerweise mit entsprechenden Hydraulikschläuchen oder -rohren verbunden sind. Der vom Generator 31 produzierte Strom wird dann zum Stromrichter in dem Gehäuse 30 übertragen, wo er mit Hilfe der in dem Gehäuse 30 angeordneten Steuerung verarbeitet, d.h. der Energiefluss zur Batterie bzw. zu dem oder den Verbrauchern gesteuert wird. Der Generator 31 hat beispielsweise eine Leistung im Bereich von 20 bis 30 kW. Anstelle eines Hydrauliksystems für die Umwandlung bzw. die Übertragung der Energie aus der Radachsen-Rotation zum Generator oder in Kombination damit kann grundsätzlich natürlich auch ein Pneumatiksystem verwendet werden.

Die Energieversorgung 11 kann auch weitere, nicht dargestellte Komponenten umfassen, die ebenfalls am Adapterrahmen 20 befestigt werden können. Am Adapterrahmen 20 können zudem auch weitere Komponenten befestigt sein oder werden, die nicht zur Energieversorgung 11 gehören.

Die Kabel, d.h. die Strom- und/oder Signalkabel, die zur Verbindung der einzelnen Komponenten und Teile der Energieversorgung benötigt werden, werden in dem hier dargestellten Beispiel im Mittelbereich 26 geführt. Dieser Bereich zwischen den beiden Längsträgern bildet somit eine Art Kabelkanal. Eine Abdeckung 32, die in dem Mittelbereich 26 auf beiden Seiten des Adapterrahmens 20 angebracht ist, schützt diese Kabel vor Beschädigung etc. In diesem Kabelkanal können natürlich auch noch weitere Komponenten untergebracht werden, wie beispielsweise der Vorratsbehälter für die Hydraulikflüssigkeit für die Hydraulikpumpe. Diese Hydraulikflüssigkeit ist in der Regel ein Hydrauliköl.

Figur 4 zeigt weiter zwei Steckdosen 33, die jeweils am Ende von Armen 34 angeordnet sind, welche mittig aussen und drehbar an den beiden Querträgern 22 befestigt sind. Die Steckdosen 33 wiederum sind elektrisch mit dem Lastanschluss der Energieversorgung verbunden, welcher hier nicht sichtbar ist, da er sich ebenfalls innerhalb des Gehäuses 30 befindet. An diesen Steckdosen 33 können jeweils Energieverbraucher, wie beispielsweise Kühlaggregate, von mit dem Adapterrahmen 20 verbundenen Containern eingesteckt werden. Die am Lastanschluss bzw. an den Steckdosen 33 zur Verfügung gestellte Energie wird beispielsweise in der Form eines Mehrphasen-Stromnetzes mit 3 Mal 400 Volt Wechselstrom mit einer ortsüblichen Frequenz, beispielsweise 50 oder 60 Hertz, bereitgestellt. Dies kann selbstverständlich aber auch in Form eines ein- oder mehrphasigen Anschlusses mit beliebigen Amplituden und/oder Frequenzen oder auch als Gleichstrom mit beliebiger Spannung erfolgen.

Figur 5 zeigt den Adapterrahmen aus Figur 3, diesmal jedoch von oben und im Gegensatz zu Figur 4, mit einer maximal ausgebauten Batterie. In diesem Beispiel sind sämtliche Montageplätze 28, der beiden Halterahmen 27 mit einem Akkumodul 29 ausgestattet. Eines der Akkumodule 29 ist geöffnet dargestellt, sodass der Blick auf das Innere des Gehäuses dieses Akkumoduls 29 frei ist.

Dieses geöffnete Akkumodul 29 ist in Figur 6 etwas grösser dargestellt. Hier ist ersichtlich, dass das Akkumodul 29 insgesamt acht Akkublöcke 39 umfasst, welche in dem Gehäuse zu zwei Reihen à vier Akkublöcke 39 angeordnet sind.

Jeder dieser Akkublöcke 39 umfasst jeweils wiederum eine bestimmte Anzahl an zusammengeschalteten Akkuzellen. In dem dargestellten Beispiel sind es 16 Akkuzellen.

Als Akkuzellen werden beispielsweise LiFePO4 Rundzellen benutzt, welche je eine Spannung von rund 3.25 Volt aufweisen sowie zyklenfest und eigensicher sind. Solche Lithium-Eisenphosphat Rundzellen haben eine hohe Energie- und Leistungsdichte. Ein Akkublock 39 liefert bei 16 solchen Zellen eine Spannung von etwa 52 Volt. Bei 8 Akkublöcken 39 pro Akkumodul 29 liefert somit jedes Akkumodul 29 eine Spannung von gut 400 Volt. Auf diese Weise kann pro Akkublock 39 eine Kapazität von etwa 6.1 kWh und somit pro Akkumodul 29 eine Kapazität von etwa 48.8 kWh erreicht werden. Bei maximal acht Akkumodulen 29 ergibt das eine Gesamtkapazität von ca. 390 kWh.

Selbstverständlich können aber auch andere Akkuzellen verwendet werden, die wiederum zu anderen Blöcken und Modulen zusammengefasst werden können.

Figur 7 zeigt einen einzelnen Akkublock 39, wobei an der in der gewählten Darstellung vorderen Seitenwand des Akkublocks 39 die Anschlüsse 40 dargestellt sind, mit welchen die Akkublöcke 39 untereinander elektrisch verbunden werden können.

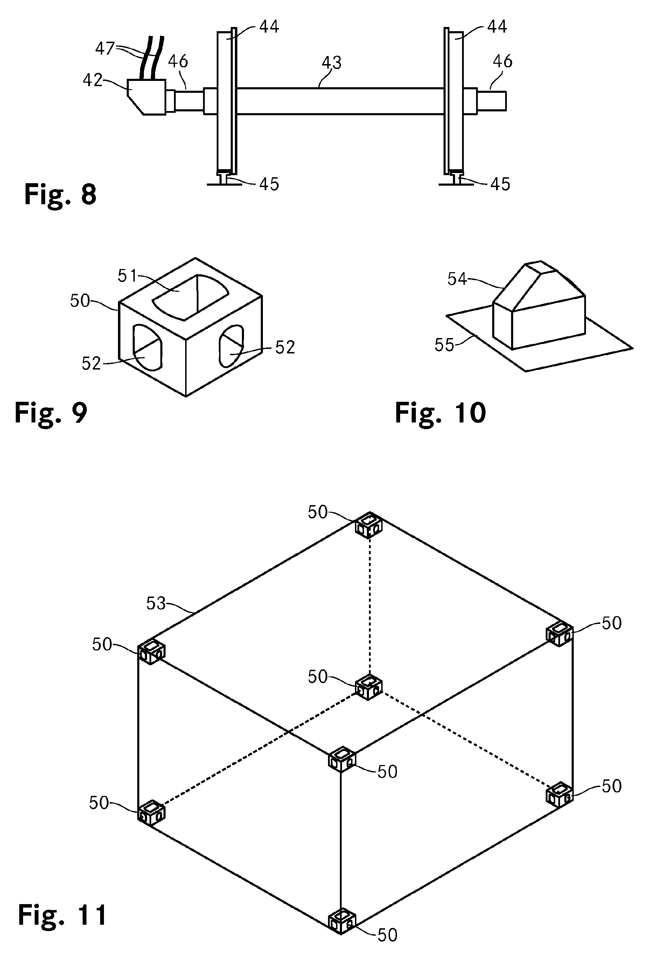

In Figur 8 ist schematisch die Befestigung der Hydraulikpumpe 42 eines Hydraulikgenerators an der Radachse 43 eines Containertragwagens dargestellt. An der Radachse 43 sind zwei Räder 44 befestigt, welche auf angedeuteten Schienen 45 abrollen. Die Radachse 43 ist länger als der Abstand der beiden Räder 44, so dass sie bei beiden Rädern 44 übersteht. Auf einem solchen Achsstummel ist nun die Hydraulikpumpe 42 axial befestigt, wobei sie mittels zweier Hydraulikschläuche 47 mit dem Hydraulikgenerator verbunden ist. Das rotierende Element der Hydraulikpumpe 42 wird dabei direkt axial an der Radachse 43 befestigt, wohingegen das Gehäuse der Hydraulikpumpe 42 mit dem Wagenchassis verbunden wird. Das in Figur 8 nicht dargestellte Wagenchassis weist auf beiden Seiten jeweils ein Achslager auf, in welchen die Bereiche 46 der Radachse 43 gelagert sind. Auf diese Weise nutzt die Hydraulikpumpe 42 die Drehbewegung der Radachse 43, um die Hydraulikflüssigkeit mittels der beiden Hydraulikschläuche 47 zum Hydraulikgenerator und wieder zurück zu pumpen und so den Hydraulikgenerator anzutreiben.

Figur 9 zeigt eine schematische Darstellung eines Verbindungselements 50 der Verbindungsvorrichtung eines Containers. Das Verbindungselements 50 ist quaderförmig und weist drei durchgehende Öffnungen 51, 52 auf, welche jeweils zwei sich gegenüberliegende Seitenflächen des quaderförmigen Verbindungselements 50 verbinden. Die Öffnung 51, welche Deck- und Bodenfläche des Verbindungselements 50 verbindet, ist deutlich länger wie breit. Die beiden anderen Öffnungen 52 sind typischerweise nur wenig länger wie breit.

Figur 10 zeigt einen Zapfen 54, der beispielsweise an einem Fahrzeug 55 angeordnet ist und eine Länge aufweist, die länger ist als eine Breite des Zapfens 54. Der Querschnitt des Zapfens ist dabei so gewählt, dass er in die Öffnung 51 eins an einem Container angeordneten Verbindungselements 50 eingeführt werden kann. Um das Einführen des Zapfens 54 in die Öffnung 51 eines Verbindungselements 50 zu erleichtern, ist der Endbereich des Zapfens 54 konisch ausgebildet. Typischerweise sind mindestens vier solcher Zapfen 54 an dem Fahrzeug angeordnet, sodass die Zapfen 54 auf dem Fahrzeug beim Aufsetzen eines Containers in die Öffnungen 51 der in den Ecken des Containers angeordneten Verbindungselemente 50 eingeführt und darin aufgenommen werden.

Die Zapfen 54 bzw. die Verbindungselemente 50 können auch so ausgeführt sein, dass ein aufgesetzter Container gesichert werden kann. So gibt es beispielsweise Verbindungselemente 50, bei denen der konische Endbereich drehbar ist, sodass er nach dem Einführen in eine Öffnung 51 durch Drehen gesichert werden kann.

Wie in Figur 11 dargestellt, ist ein solches Verbindungselement 50 in den Ecken eines Transportcontainers 53 angeordnet und dort fixiert. Derartige Verbindungselemente 50 können auch fest als Teil des Containers ausgebildet sein. Sie können auch nur in einem Teil der Ecken, beispielsweise nur in den Bodenecken eines Containers vorgesehen sein.

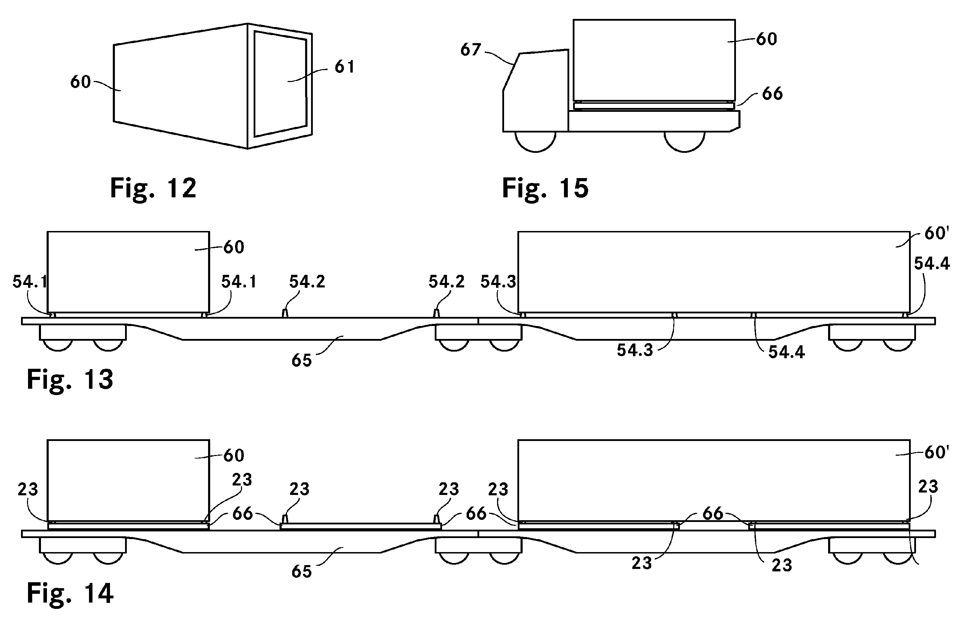

In Figur 12 ist schematisch ein Kühlcontainer 60 dargestellt, wie er häufig für den Transport von Lebensmitteln verwendet wird. Der Kühlcontainer 60 hat eine quaderförmige Grundstruktur mit einer Länge von 20 ft, wobei an einer Stirnseite ein Kühlaggregat 61 so angeordnet ist, dass es innerhalb der Normmasse der entsprechenden Containernorm liegt.

Der Kühlcontainer 60 kann, wie in Figur 13 dargestellt, auf einem herkömmlichen Containertragwagen 65 befestigt werden. Ein solcher Containertragwagen 65 umfasst in diesem Beispiel vier Sets 54.1, 54.2, 54.3, 54.4 à jeweils 4 Zapfen - d.h. je zwei Zapfen pro Set 54.1, 54.2, 54.3, 54.4 auf beiden Seiten des Containertragwagens 65 in einem Längsabstand zur Aufnahme von 20 Fuss - Containern. Auf diese Weise kann ein Kühlcontainer, je nachdem welche Länge er hat und welche anderen Container auf dem Containertragwagen noch transportiert werden sollen, an verschiedenen Positionen auf dem Containertragwagen 65 aufgesetzt werden. Im dargestellten Beispiel ist der Container 60 an der ersten Position (in der Darstellung von links her gesehen) aufgesetzt. Die zweite Position ist frei und die dritte sowie die vierte Position sind durch einen zweiten, jedoch längeren Kühlcontainer 60' belegt.

Anstatt die Kühlcontainer 60, 60' nun direkt auf die Zapfen am Containertragwagen 65 aufzusetzen, können ein oder mehrere erfindungsgemässe Energieversorgungen 66 mit ihren Adapterrahmen zwischen den Kühlcontainern 60, 60' und dem Containertragwagen 65 angeordnet werden, wie dies in Figur 14 dargestellt ist. Dabei müssen nicht alle Sets 54.1, 54.2, 54.3, 54.4 von Zapfen mit einer erfindungsgemässen Energieversorgungen 66 belegt werden. Auf die Zapfen der vier Sets 54.1, 54.2, 54.3, 54.4 Sets des Containertragwagens 65 werden zunächst Adapterrahmen 20, wie sie in Figur 3 dargestellt sind, aufgesetzt, sodass die Adapterrahmen an den jeweiligen Containerpositionen zu liegen kommen, wobei die Zapfen des Tragwagens in die Öffnungen 24 an der Unterseite der Adapterrahmen 20 jeder Energieversorgung 66 eingeführt werden. Dort können die Adapterrahmen 20 bei Bedarf gesichert werden, beispielsweise mittels Bolzen. Die Kühlcontainer 60, 60' werden dann mit ihren in den Bodenecken angeordneten Öffnungen auf die Zapfen 23 der Adapterrahmen 20 der Energieversorgungen 66 aufgesetzt und dort gegebenenfalls wiederum gesichert. Dann müssen lediglich noch die Hydraulikpumpen der Energieversorgungen 66 an den jeweiligen Achsen befestigt und mittels Hydraulikschläuchen mit dem Generator der entsprechenden Energieversorgungen 66 verbunden sowie die Kühlaggregate der Kühlcontainer 60, 60' am Lastanschluss der jeweiligen Energieversorgungen 66 angeschlossen werden. Auf diese Weise können die Kühlaggregate 61 der Kühlcontainer 60, 60' von der Energieversorgung mit Strom versorgt werden. Es ist natürlich auch möglich, dass auf dem Containertragwagen 65 nur eine Energieversorgung 66 montiert wird und beide Kühlcontainer 60, 60' von dieser einen Energieversorgung 66 mit Strom versorgt werden. Umgekehrt ist es auch möglich, mehrere Energieversorgungen 66 zu nutzen, um einen Energieverbraucher mit hohem Energieverbrauch mit Strom zu versorgen.

Figur 15 schliesslich zeigt wiederum den Kühlcontainer 60, der auch hier mittels einer erfindungsgemässen Energieversorgung 66 auf einem LKW 67 befestigt ist. Beim Transport eines solchen Containers mit einem LKW 67 kann die Energieversorgung 66 grundsätzlich zwar auch mit kinetischer Energie vom LKW 67 versorgt werden. Dies ist typischerweise jedoch aufwändiger als bei Containertragwagen, da bei LKWs die Anordnung und konkrete Ausgestaltung der Radachsen bzw. Räder nicht einheitlich ist. Es kann sein, dass der LKW 67 ein Dieselaggregat oder ähnliche Aggregate zur Stromerzeugung oder eine andere Quelle zu Bereitstellung von elektrischer Energie umfasst, welche dann am Energieanschluss für die Energieversorgung 66 bereitgestellt werden kann. Selbstverständlich können während des Transports mit einem LKW 67 auch andere Energiequellen wie etwa Sonnen- oder Windenergie genutzt werden, um Energie am Energieanschluss der Energieversorgung 66 bereitzustellen. Häufig, insbesondere jedoch im kombinierten Verkehr mit möglichst kleinem Streckenanteil auf der Strasse, reicht die in der Batterie vorhandene Kapazität jedoch aus, um den Container während des Strassentransports ausreichend mit Energie zu versorgen.

Allgemein ist festzuhalten, dass die vorgängig gemachten Angaben zu den Kapazitäten, Leistungen etc. einzelner Einheiten passend zu dem angegebenen Beispiel gewählt sind, grundsätzlich aber beliebig gewählt werden können. D. h. sie können und sollen auf die konkrete Anwendung abgestimmt werden. Dabei ist natürlich auch zu beachten, dass die einzelnen Geräte bzw. Module ebenfalls aufeinander abgestimmt sind.

Zusammenfassend ist festzustellen, dass es die Erfindung ermöglicht, eine autonome Energieversorgung bereitzustellen, die beim Transport von Waren, insbesondere mit weit verbreiteten Transportbehältern wie etwa einem ISO-Container, äusserst flexibel eingesetzt werden kann. Sie kann nicht nur zur Energieversorgung von am oder im Transportbehälter angeordneten Energieverbrauchern wie z.B. von Kühlvorrichtungen, sondern auch zur Energieversorgung von nicht zum Transportbehälter gehörigen, beispielsweise an einem Transportfahrzeug oder an einem sonstigen, beliebigen Ort angeordneten Energieverbrauchern genutzt werden.

## Patentansprüche

1. Energieversorgungsanordnung zur Versorgung eines Energieverbrauchers mit elektrischer Energie, mit einer Montagevorrichtung, an welcher ein Energieanschluss zum Empfangen von Energie, ein Energiespeicher zum Speichern von elektrischer Energie, eine Ladevorrichtung zum Speichern von an dem Energieanschluss empfangener Energie im Energiespeicher, sowie ein Lastanschluss zum Anschliessen des Energieverbrauchers zur Versorgung des Energieverbrauchers mit der im Energiespeicher gespeicherten elektrischen Energie angeordnet sind, **dadurch gekennzeichnet, dass** die Montagevorrichtung eine erste Verbindungsvorrichtung umfasst zur lösbaren Verbindung mit einer Befestigungsvorrichtung eines Transportbehälters zur Verbindung des Transportbehälters mit einem gleichartigen Transportbehälter bzw. mit einem Fahrzeug wie beispielsweise einem Schienenfahrzeug, einem Kraftfahrzeug oder einem Wasserfahrzeug.

2. Energieversorgungsanordnung nach Anspruch 1, wobei die Montagevorrichtung eine zweite Verbindungsvorrichtung umfasst zur lösbaren Verbindung mit einer Befestigungsvorrichtung eines Fahrzeugs zur Verbindung des Fahrzeugs mit dem Transportbehälter.

3. Energieversorgungsanordnung nach einem der Ansprüche 1 bis 2, umfassend einen Energiewandler zur Umwandlung der am Energieanschluss empfangenen Energie in elektrische Energie, welche von der Ladevorrichtung im Energiespeicher speicherbar ist, wobei der Energiewandler vorzugsweise einen Generator zur Umwandlung einer kinetischen Energie des Fahrzeugs in elektrische Energie umfasst, insbesondere einen Generator zur Umwandlung einer Rotationsenergie eines rotierenden Elements des Fahrzeugs in elektrische Energie.

4. Energieversorgungsanordnung nach Anspruch 3, wobei der Energiewandler einen Hydraulikgenerator umfasst zur Umwandlung der Rotationsenergie einer Radachse eines Fahrzeugs in elektrische Energie, und der Hydraulikgenerator eine an der Radachse befestigbare Hydraulikpumpe sowie einen an der Montagevorrichtung befestigten Elektrogenerator umfasst, und die Hydraulikpumpe über Hydraulikschläuche mit dem Elektrogenerator verbunden ist.

5. Energieversorgungsanordnung nach einem der Ansprüche 3 bis 4, umfassend einen Stromrichter zur Umwandlung der vom Energiewandler bereitgestellten elektrischen Energie in eine zum Laden des Energiespeichers geeignete Form elektrischer Energie.

6. Energieversorgungsanordnung nach Anspruch 5, wobei der Stromrichter ausgebildet ist zur Umwandlung der vom Energiewandler bereitgestellten elektrischen Energie in eine zum Betrieb des Energieverbrauchers nutzbare und am Lastanschluss ausgebbare Form elektrischer Energie.

7. Energieversorgungsanordnung nach einem der Ansprüche 1 bis 6, umfassend einen Netzanschluss zum Anschliessen einer externen elektrischen Energiequelle, insbesondere eines Stromversorgungsnetzes, wobei die Ladevorrichtung ausgebildet ist zum Speichern von an dem Netzanschluss empfangener elektrischer Energie im Energiespeicher, und die Energieversorgungsanordnung vorzugsweise zur direkten Versorgung eines am Lastanschluss angeschlossenen Energieverbrauchers mit an dem Netzanschluss empfangener elektrischer Energie ausgebildet ist.

8. Energieversorgungsanordnung nach einem der Ansprüche 1 bis 7, wobei der Energieverbraucher am oder im Transportbehälter angeordnet ist und insbesondere eine Kühlvorrichtung zur Kühlung eines Ladevolumens des Transportbehälters umfasst und die Kühlvorrichtung insbesondere ein mit einem Elektromotor betreibbares Kühlaggregat umfasst.

9. Energieversorgungsanordnung nach einem der Ansprüche 1 bis 8, wobei der Transportbehälter ein Container ist, insbesondere ein Container mit genormten Verbindungsvorrichtungen zur Verbindung des Containers mit einem Transportfahrzeug bzw. gleichartigen Containern, vorzugsweise ein Frachtcontainer gemäss ISO-Norm 668.

10. Energieversorgungsanordnung nach einem der Ansprüche 1 bis 9, wobei der Energiespeicher modular ausgebildet ist und eine Mehrzahl von Akkumulator-Zellen umfasst, welche vorzugsweise zu einer Mehrzahl von Gruppen zusammengeschaltet sind.

11. Energieversorgungsanordnung nach einem der Ansprüche 1 bis 10, wobei die Montagevorrichtung als Adapterrahmen ausgebildet ist, welcher zwischen einem Fahrzeug und einem für den Transport mit dem Fahrzeug zu transportierenden Transportbehälter anbringbar ist, wobei der Adapterrahmen vorzugsweise eine rechteckige Grundgestalt aufweist mit einer Länge und einer Breite, welche im Wesentlichen einer Länge und einer Breite des Transportbehälters entsprechen und mit einer Höhe, welche kleiner als oder gleich 25 cm, vorzugsweise kleiner als oder gleich 11 cm ist.

12. Energieversorgungsanordnung nach einem der Ansprüche 1 bis 11, umfassend eine Steuervorrichtung zur Steuerung eines Energieflusses zwischen Energiewandler, Energiespeicher und einem am Lastanschluss angeschlossenen Energieverbraucher, wobei die Energieversorgungsanordnung für einen Systemerhalt und einen Systemstart eine Hilfs-Energiequelle, insbesondere eine zusätzlich zum Energiespeicher vorhandene Hilfsbatterie umfasst.
wobei der Lastanschluss insbesondere zum Anschliessen mehrerer Energieverbraucher ausgebildet ist.

13. Energieversorgungsanordnung nach einem der Ansprüche 1 bis 12, umfassend eine Überwachungseinrichtung zur Überwachung eines mit der Energieversorgungsanordnung verbundenen Transportbehälters, wobei die Überwachungseinrichtung insbesondere zum Empfangen und Verarbeiten von Signalen von am oder im Transportbehälter angeordneten Sensoren zur Überwachung von mit dem Transportbehälter transportierter Fracht ausgebildet ist.

14. Energieversorgungsanordnung nach einem der Ansprüche 1 bis 13, umfassend eine Kommunikationsvorrichtung zum Senden und/oder Empfangen von Signalen, insbesondere von Steuer- und/oder Überwachungssignalen, wobei die Kommunikationsvorrichtung vorzugsweise für eine drahtlose Kommunikation ausgebildet ist.

15. Transportbehälter mit einer Befestigungsvorrichtung zur Verbindung des Transportbehälters mit einem gleichartigen Transportbehälter bzw. mit einem Fahrzeug, wobei eine Energieversorgungsanordnung nach einem der vorangehenden Ansprüche mittels der ersten, mit der Befestigungsvorrichtung zusammenwirkenden Verbindungsvorrichtung mit dem Transportbehälter lösbar verbunden ist.

16. Fahrzeug mit einer Befestigungsvorrichtung zur Verbindung des Fahrzeugs mit einem Transportbehälter, wobei eine Energieversorgungsanordnung nach einem der vorangehenden Ansprüche mittels einer zweiten, mit der Befestigungsvorrichtung zusammenwirkenden Verbindungsvorrichtung zur lösbaren Verbindung der Energieversorgungsanordnung mit dem Transportbehälter am Fahrzeug lösbar befestigt ist.

17. Verfahren zur Energieversorgung eines Energieverbrauchers mit elektrischer Energie mit einer Energieversorgungsanordnung nach einem der Ansprüche 1 bis 14, wobei die Montagevorrichtung der Energieversorgungsanordnung mittels der ersten Verbindungsvorrichtung mit der Befestigungsvorrichtung des Transportbehälters verbunden und der Energieverbraucher an den Lastanschluss angeschlossen sowie mit im Energiespeicher gespeicherter Energie versorgt wird.
